(19) Europäisches Patentamt
European Patent Office
Office européen des brevets

(11) **EP 4 760 341 A1**

(12) **EUROPEAN PATENT APPLICATION**

(43) Date of publication:
**17.06.2026 Bulletin 2026/25**

(21) Application number: **25205636.1**

(22) Date of filing: **30.09.2025**

(51) International Patent Classification (IPC):
**G01S 7/4865** (2020.01)    **G01S 7/487** (2006.01)
**G01S 17/10** (2020.01)

(52) Cooperative Patent Classification (CPC):
**G01S 17/10; G01S 7/4865; G01S 7/487;
G01S 7/4873; G01S 7/4876**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.12.2024 CN 202411813244**

(71) Applicant: **Sndway Technology (Guangdong) Co.,
Ltd.
Dongguan Guangdong (CN)**

(72) Inventors:
• **LUO, Bin
  No. 58, Tuanjie Road, Humen Town, Dongguan ,
  Guangdong (CN)**
• **HE, Gang
  No. 58, Tuanjie Road, Humen Town, Dongguan ,
  Guangdong (CN)**

(74) Representative: **Herrero & Asociados, S.L.
Edificio Aqua - Calle Agustín de Foxá, 4-10, 2ºA
28036 Madrid (ES)**

(54) **METHOD FOR IMPROVING RANGING SPEED OF LASER RANGE FINDER AND LASER
RANGE FINDER**

(57)    A method for improving ranging speed of a laser range finder includes: controlling the laser emitter to emit a laser ranging pulse signal to a measured object, and controlling the optical signal receiver to receive an optical reflection signal reflected by the measured object; performing, by using a mean filtering method, a filtering process on the optical reflection signal to obtain a filtered signal; where the filtered signal includes multiple waveform signals; comparing a signal-to-noise ratio value of each waveform signal to its signal-to-noise ratio reference value, and screening waveform signals with the signal-to-noise ratio value greater than its signal-to-noise ratio reference value as screened signals for ranging; where the signal-to-noise ratio reference value is determined based on a measured object distance corresponding to each waveform signal; and determining, based on the screened signals, a final measured object distance, thereby greatly improving the ranging speed and ranging efficiency.

Controlling the laser emitter to emit a laser ranging pulse signal to an object to be measured, and controlling the optical signal receiver to receive an optical reflection signal reflected by the object to be measured — S110

Performing, by using a mean filtering method, a filtering process on the optical reflection signal to obtain a filtered signal; where the filtered signal includes multiple waveform signals — S120

Comparing a signal-to-noise ratio value of each of the multiple waveform signals to a signal-to-noise ratio reference value corresponding to the signal-to-noise ratio, and screening waveform signals of the multiple waveform signals each with the signal-to-noise ratio value greater than the signal-to-noise ratio reference value corresponding to the signal-to-noise ratio as screened signals for ranging; where the signal-to-noise ratio reference value is determined based on a distance of the object to be measured corresponding to each of the multiple waveform signals — S130

Determining, based on the screened signals, a final distance of the object to be measured — S140

FIG. 1

## Description

CROSS-REFERENCE TO RELATED APPLICATION

This application claims priority to Chinese Patent Application No. 202411813244.1, filed on December 11, 2024, which is herein incorporated by reference in its entirety.

TECHNICAL FIELD

The invention relates to the field of laser ranging technologies, and more particularly to a method for improving range finding speed of a laser range finder and a laser range finder.

BACKGROUND

When existing laser range finders perform laser ranging, they all emit multiple laser signals to the object to be measured. The receiver then processes the waveform signals reflected by the object to be measured one by one, determines valid signals based on a frequency of a position where a maximum peak value of the reflected signals appears, and calculates a distance of the object to be measured through the valid signals.

However, since this method needs to collect signal waves returned by multiple lasers, it takes a long time to process the signals and calculate the distance of the object to be measured, which leads to low ranging efficiency, especially when processing waveforms for long-distance ranging. Since a maximum peak of valid values in the returned waveforms is close to a peak of interference waveforms, the signals need to be further processed, such as signal integration, which will superimpose the waveforms at the same position to obtain valid waveforms. Therefore, it takes a lot of time and seriously affects the ranging efficiency of the laser range finder.

SUMMARY

In view of the above disadvantages and defects in the related art, the invention provides a method for improving ranging speed of a laser range finder and a laser range finder, which solve a technical problem in the related art a laser ranging efficiency is relatively low.

In order to achieve the above purpose, a main technical solution adopted by the invention is as follow.

In the first aspect, an embodiment of the invention provides a method for improving ranging speed of a laser range finder, which is applied to a data processor in the laser range finder. The laser range finder includes a laser emitter, an optical signal receiver and the data processor. The method includes:

controlling the laser emitter to emit a laser ranging pulse signal to an object to be measured, and controlling the optical signal receiver to receive an optical reflection signal reflected by the object to be measured;

performing, by using a mean filtering method, a filtering process on the optical reflection signal to obtain a filtered signal; where the filtered signal includes multiple waveform signals;

comparing a signal-to-noise ratio value of each of the multiple waveform signals to a signal-to-noise ratio reference value corresponding to the signal-to-noise ratio, and screening waveform signals of the multiple waveform signals each with the signal-to-noise ratio value greater than the signal-to-noise ratio reference value corresponding to the signal-to-noise ratio as screened signals for ranging; where the signal-to-noise ratio reference value is determined based on a distance of the object to be measured corresponding to each of the multiple waveform signals; and

determining, based on the screened signals, a final distance of the object to be measured.

In an embodiment, an obtaining process of the signal-to-noise ratio reference value includes:

calculating a distance of the object to be measured corresponding to a current waveform signal; where the current waveform signal is any one of the multiple waveform signals; and

substituting the distance of the object to be measured corresponding to the current waveform signal into a reference value linear proportional relationship equation to obtain a signal-to-noise ratio reference value corresponding to the current waveform signal.

In an embodiment, a calculation expression of the reference value linear proportional relationship equation is as follows:

$$y = -0.0039x + 4.9883;$$

where $y$ represents the signal-to-noise ratio reference value corresponding to the current waveform signal; and $x$ represents the distance of the object to be measured corresponding to the current waveform signal.

In an embodiment, the determining, based on the screened signals, a final distance of the object to be measured includes:

selecting, in response to the screened signals being strong, a waveform signal with a maximum peak from the screened signals as a target signal, and determining, based on the target signal, the final distance of the object to be measured.

In an embodiment, the determining, based on the screened signals, a final distance of the object to be measured includes:

intercepting, in response to the screened signals being week, a continuous signal including the screened signals from the optical reflection signal, and calculating a mean of the continuous signal; calculating a mean square error of each waveform signal in the screened signals and the mean sequentially to obtain a waveform characteristic of each waveform signal; calculating a ratio of the waveform characteristic of each waveform signal to a waveform characteristic of a prestored standard signal sequentially, and taking waveform signals corresponding to the ratio greater than a preset value as valid signals; and selecting a valid signal with a maximum ratio from the valid signals as a target signal, and determining, based on the target signal, the final distance of the object to be measured.

In the second aspect, the invention provides a laser range finder, which includes a laser emitter, an optical signal receiver and a data processor.

The data processor is configured to control the laser emitter to emit a laser ranging pulse signal to an object to be measured, and control the optical signal receiver to receive an optical reflection signal reflected by the object to be measured; perform, by using a mean filtering method, a filtering process on the optical reflection signal to obtain a filtered signal, where the filtered signal includes multiple waveform signals; compare a signal-to-noise ratio value of each of the multiple waveform signals to a signal-to-noise ratio reference value corresponding to the signal-to-noise ratio, and screen waveform signals of the multiple waveform signals each with the signal-to-noise ratio value greater than the signal-to-noise ratio reference value corresponding to the signal-to-noise ratio as screened signals for ranging, where the signal-to-noise ratio reference value is determined based on a distance of the object to be measured corresponding to each of the multiple waveform signals; and determine, based on the screened signals, a final distance of the object to be measured.

In an embodiment, the data processor is specifically configured to calculate a distance of the object to be measured corresponding to a current waveform signal, where the current waveform signal is any one of the multiple waveform signals; and substitute the distance of the object to be measured corresponding to the current waveform signal into a reference value linear proportional relationship equation to obtain a signal-to-noise ratio reference value corresponding to the current waveform signal.

In an embodiment, a calculation expression of the reference value linear proportional relationship equation is as follows:

$$y = -0.0039x + 4.9883;$$

where $y$ represents the signal-to-noise ratio reference value corresponding to the current waveform signal; and $x$ represents the distance of the object to be measured corresponding to the current waveform signal.

In an embodiment, the data processor is specifically configured to select, in response to the screened signals being strong, a waveform signal with a maximum peak from the screened signals as a target signal, and determine, based on the target signal, the final distance of the object to be measured.

In an embodiment, the data processor is specifically configured to intercept, in response to the screened signals being week, a continuous signal including the screened signals from the optical reflection signal, and calculate a mean of the continuous signal; calculate a mean square error of each waveform signal in the screened signals and the mean sequentially to obtain a waveform characteristic of each waveform signal; calculate a ratio of the waveform characteristic of each waveform signal to a waveform characteristic of a prestored standard signal sequentially, and take waveform signals corresponding to the ratio greater than a preset value as valid signals; and select an valid signal with a maximum ratio from the valid signals as a target signal, and determining, based on the target signal, the final distance of the object to be measured.

The invention has the following beneficial effects.

The invention provides a method for improving ranging speed of a laser range finder and a laser range finder. The laser emitter is controlled to emit the laser ranging pulse signal to the object to be measured, and the optical signal receiver is controlled to receive the optical reflection signal reflected by the object to be measured. The mean filtering method is used to perform the filtering process on the optical reflection signal to obtain the filtered signal. The filtered signal includes multiple waveform signals. The signal-to-noise ratio value of each waveform signal is compared to the signal-to-noise ratio reference value corresponding to the signal-to-noise ratio, and the waveform signals of the multiple waveform signals each with the signal-to-noise ratio value greater than the signal-to-noise ratio reference value corresponding to the signal-to-noise ratio is screened as the screened signals for ranging. The final distance of the object to be measured is determined based on the screened signals, so that only one laser signal needs to be emitted to obtain an accurate waveform returned by the object to be measured, thereby greatly improving the ranging speed and ranging efficiency.

In order to make the aforementioned objectives, features and advantages to be achieved by the embodiments of the invention more obvious and understandable, the following specifically cites embodiments and describes them in detail with reference to drawings.

BRIEF DESCRIPTION OF DRAWINGS

In order to describe technical solutions of embodiments of the invention more clearly, drawing required for use in the embodiments of the invention will be briefly introduced below. It should be understood that the following drawings only show certain embodiments of the invention and therefore should not be regarded as limiting a scope. For those skilled in the art, other related drawings can be obtained based on these drawings without creative work.

FIG. 1 illustrates a flowchart of a method for improving ranging speed of a laser range finder according to an embodiment of the invention.
FIG. 2 illustrates a schematic diagram of selecting valid waveform signals according to coordinates of signal-to-noise and distance according to an embodiment of the invention.
FIG. 3 illustrates a structural block diagram of a laser range finder according to an embodiment of the invention.

DETAILED DESCRIPTION OF EMBODIMENTS

In order to describe the invention better, and facilitate understanding, the invention is described in detail below through specific embodiments in conjunction with the drawings.

In order to solve a problem in the related art that a ranging efficiency is relatively low, the invention provides a method for improving ranging speed of a laser range finder and a laser range finder. A laser emitter is controlled to emit a laser ranging pulse signal to an object to be measured, and an optical signal receiver is controlled to receive an optical reflection signal reflected by the object to be measured. A mean filtering method is used to perform a first filtering process on the optical reflection signal to obtain a filtered signal. The filtered signal includes multiple waveform signals. A signal-to-noise ratio value of each waveform signal is compared to a signal-to-noise ratio reference value corresponding to the signal-to-noise ratio, and waveform signals of the multiple waveform signals each with the signal-to-noise ratio value greater than the signal-to-noise ratio reference value corresponding to the signal-to-noise ratio is screened as screened signals for ranging. A final distance of the object to be measured is determined based on the screened signals, so that only one laser signal needs to be emitted to obtain an accurate waveform returned by the object to be measured, thereby greatly improving the ranging speed and ranging efficiency.

In order to better understand the above technical solution, exemplary embodiments of the invention will be described in more detail below with reference to the drawings. Although the exemplary embodiments of the invention are shown in the drawings, it should be understood that the invention can be implemented in various forms and should not be limited by the embodiments described herein. On the contrary, these embodiments are provided to enable a clearer and more thorough understanding of the invention and to fully convey a scope of the invention to those skilled in the art.

First embodiment

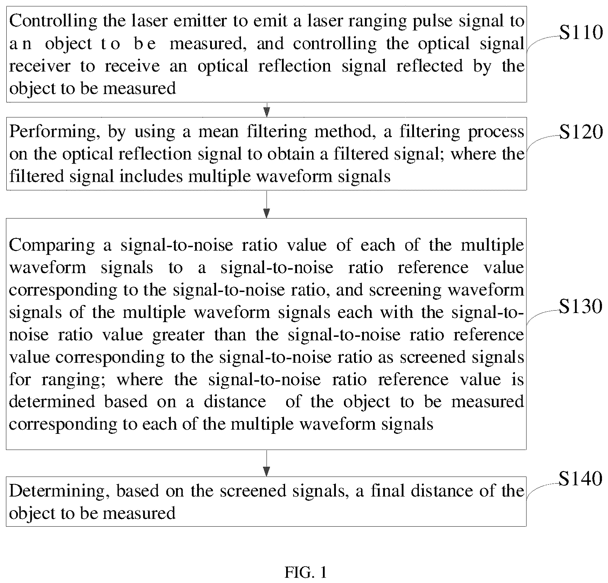

Referring to FIG. 1, FIG. 1 illustrates a flowchart of a method for improving ranging speed of a laser range finder. Specifically, the method can be applied to a data processor in the laser range finder. The laser range finder includes a laser emitter, an optical signal receiver and the data processor. The method includes the following steps S110-S140.

In step S110, the laser emitter is controlled to emit a laser ranging pulse signal to an object to be measured, and the optical signal receiver is controlled to receive an optical reflection signal reflected by the object to be measured.

Specifically, a laser ranging pulse signal is emitted to the object to be measured through the laser emitter of the laser range finder, the optical signal receiver of the laser range finder receives the optical reflection signal, and the data processor of the laser range finder process the optical reflection signal received by the optical signal receiver, thereby obtaining received waveform signals.

In step S120, a mean filtering method is used to perform a first filtering process on the optical reflection signal to obtain the filtered signal. The filtered signal includes multiple waveform signals.

It should be noted that a specific process of the mean filtering method can be set according to actual needs, and the embodiments of the invention are not limited to this.

Specifically, when detecting the laser reflection signal (i.e., the optical reflection signal), the optical signal receiver starts working, continuously collects multiple returned waveform signals (the waveform signals can be preset), takes an average of the collected waveform signals, calculates a preset multiple of the average to obtain a calculated value, takes the calculated value as a waveform signal reference value for filtering, and filters signals smaller than the reference value to complete the first signal process (i.e., the first filtering process), thereby obtaining the filtered signal. Specifically, a specific value of the preset multiple can be set according to actual needs, the embodiments of the invention are not limited to this. For example, the preset multiple can be a value in a range of 1.1 to 1.3.

In step S130, a signal-to-noise ratio value of each waveform signal is compared with its corresponding signal-to-noise ratio reference value, and waveform signals with the signal-to-noise ratio value greater than its corresponding signal-to-noise ratio reference value are screened as screened signals for ranging.

It should be understood that the obtaining process of the signal-to-noise ratio reference value can be set according to actual needs, the embodiments of the invention are not limited to this.

Specifically, a distance of the object to be measured corresponding to a current waveform signal is calculated. The current waveform signal is any one of the multiple waveform signals. The distance of the object to be measured corresponding to the current waveform signal is substituted into a reference value linear proportional relationship equation to obtain a signal-to-noise ratio reference value corresponding to the current waveform signal.

For example, an obtaining process of the reference value linear proportional relationship equation includes the following steps.

According to strength characteristics of waveform signals returned by the object to be measured at different distances during laser ranging process (when the distance of the object to be measured is close, the returned signal is strong, and a waveform peak is high; and when the distance of the object to be measured is further, the returned signal is weak, and the waveform peak is low; that is, the strength of the returned signal is relative and mainly determined by the distance between the object to be measured and the laser range finder), and a linear proportional relationship of peak height of waveform is used to preset signal-to-noise ratio reference values of the object to be measured at different distance positions, and the reference value linear proportional relationship equation is as follows:

$$y = ax + b;$$

where y represents the signal-to-noise ratio reference value corresponding to the current waveform signal; *a* represents a gradient of the reference value linear proportional relationship equation, and it can be taken as -0.0039; *x* represents the distance of the object to be measured corresponding to the current waveform signal; and *b* represents a constant, and it can be taken as 4.9883.

It should be noted that the reference value linear proportional relationship equation can be originally obtained, and in the subsequent use process, the distance of the object to be measured corresponding to the current waveform signal can be directly substituted, without the need to obtain the reference value linear proportional relationship equation mentioned above.

Subsequently, the signal-to-noise ratio value of each waveform signal is compared with its corresponding signal-to-noise ratio reference value, and waveform signals with the signal-to-noise ratio value greater than its corresponding signal-to-noise ratio reference value are screened as the screened signals for ranging, that is, the waveform signals obtained by a second signal process.

In other words, the step S120 of the invention is the first signal process (i.e., first filtering process), and the step S130 of the invention is the second signal process, so that some weak clutter signals with peaks smaller than the mean can be filtered out through the first signal process, thereby reducing the amount of post-processing signals, and improving signal processing efficiency; and other interference signals that affect measurement accuracy can be removed through the second signal process, thereby further reducing the clutter signals, and a waveform similar to the target waveform can be obtained through two filtering.

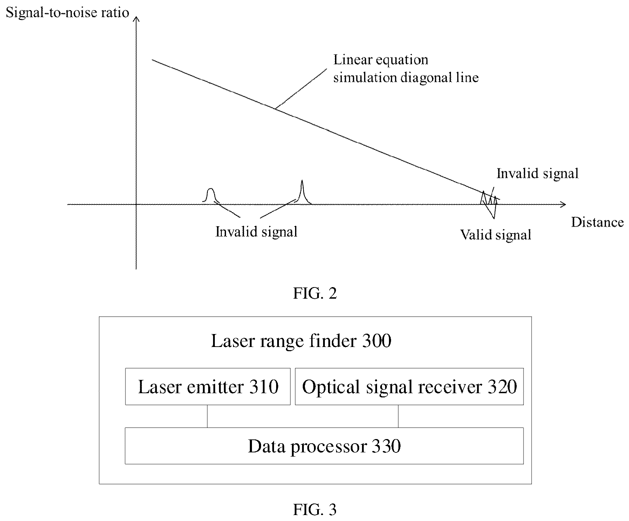

It should be noted that through the above second signal processes, the cluster interference signals can be effectively and rapidly excluded. As shown in FIG. 2, since in the received signals, there will be some interference signals that are stronger than the signal returned by the object to bs measured, especially when performing long-distance measurement, when there is a clutter signal that is stronger than the signal returned by the object to be measured, the system will make a misjudgment and identify the clutter signal as a valid waveform, thereby outputting the measured distance after calculation, causing measurement error or invalid measurement. Therefore, after the second signal process of the invention, according to the difference in the signal-to-noise ratio of the waveform returned by the object to be measured at different distances, a signal-to-noise ratio range value of the valid signal at the current distance is set, and the linear proportional relationship is set according to different distances. During ranging, when a signal with a large signal-to-noise ratio appears at a certain distance, the second signal process is performed. When the signal-to-noise ratio value of the signal is less than the preset value of the current distance calculated by the linear equation, the signal is filtered out, thereby filtering out the interference signal, so that the acquired signal is more accurate.

In step S140, a final distance of the object to be measured is determined based on the screened signals. The distance of the object to be measured is a distance between the laser range finder and the object to be measured.

It should be understood that a specific process of determining the final distance of the object to be measured based on the screened signals can be set according to actual needs, the embodiments of the invention are not limited to this.

In an embodiment, when the screened signals are strong, a waveform signal with a maximum peak is selected from the screened signals as a target signal, and the final distance of the object to be measured is determined based on the target signal. A specific process of determining the final distance of the object to be measured based on the target signal can be implemented according to the existing method, the invention does not limit this.

In other words, when the screened signals are strong (that is, the measurement distance is short), the waveform signal with the maximum peak in the waveforms after the second signal process can be directly selected and used as the target signal, and the final distance of the object to be measured can be determined based on the target signal.

It should be understood that the specific method for determining the strength of the screened signal can be set according to actual needs, and the embodiments of the invention are not limited to this.

For example, when the laser range finder has a short-distance measurement mode and a long-distance measurement mode, it can be determined which measurement mode the user has selected. When it is determined that the measurement mode selected by the user is the short-distance measurement mode, it can be determined that the distance to the object to be measured is relatively close, so that the screened signals are relatively strong. When it is determined that the measurement mode selected by the user is the long-distance measurement mode, it can be determined that the distance to the object to be measured is relatively far, so that the screened signals are relatively weak.

For another example, amplitudes of all screened signals may be detected, and the strengths of the screened signals may be determined based on the detected amplitudes.

In an embodiment, when the screened signals are weak, a continuous signal including the screened signals is intercepted from the optical reflection signal, and a mean of the continuous signal is calculated. A mean square error of each waveform signal in the screened signals and the mean is calculated sequentially to obtain a waveform characteristic of each waveform signal. A ratio of the waveform characteristic of each waveform signal to a waveform characteristic of a prestored standard signal is calculated sequentially, and waveform signal corresponding to the ratio greater than a preset value is taken as valid signals. A valid signal with the largest ratio is selected from all valid signals as the target signal, and the final distance of the object to be measured is determined based on the target signal.

Specifically, the standard signal is obtained by obtaining the signals returned by multiple range finders in an ideal environment and calculating the mean. During the laser ranging process, when the laser range finder reaches a certain distance, the returned signals will become very weak, and its waveform will approach a small spike wave. Moreover, the waveforms of the subsequent distances are basically the same, and the difference is not too large. Thus, one or more distances in this distance can be selected, multiple range finders can be used to measure in the ideal environment, and the mean is taken to obtain the standard signal. For example, a range is 1000 meters (m), and after reaching 600 m, the signal becomes very weak. The signal waveforms obtained between 600 m and 1000 m are basically the same and will not change much. Thus, one or more distances between 600 m and 1000 m can be taken, multiple range finders can be used to measure, and the mean is taken to obtain the standard signal.

For example, when the screened signals are weak, a continuous signal (the continuous signal includes 1 to n signals, and n is a natural number) including the screened signals is intercepted from the optical reflection signal, which is recorded as $X = \{x_1, x_2 \ldots \ldots x_n\}$.

It should be noted that the n signals $x_1, x_2 \ldots \ldots x_n$ can all be regarded as a data set.

Then, the mean $\overline{X}$ of the continuous signal can be calculated, which is $\overline{X} = \frac{\sum_{i=1}^{n} x_i}{n}$.

Then, according to the following formula, the mean square error of each waveform signal $x_i$ and the mean $\overline{X}$ in the screened signals is calculated sequentially as the waveform characteristic $CH_i$ of each waveform signal, $i$ is any natural number from 1 to n, and the calculation expression of the waveform feature $CH_i$ of the $i^{th}$ waveform signal is as follows:

$$CH_i = \sqrt{\sum_{j=1}^{p}(x_{i_j} - \overline{X})^2};$$

where $CH_i$ represents the waveform characteristic of the $i^{th}$ waveform signal; $x_{ij}$ represents $j^{th}$ data in the $i^{th}$ waveform signal, and $p$ represents a total number of data included in the $i^{th}$ waveform signal.

Then, a ratio of the waveform characteristic $CH_i$ of the $i^{th}$ waveform signal to a waveform characteristic $CH_s$ of the standard signal is calculated, that is, $CH_i/CH_s$. Then, the waveform signals corresponding to the ratio greater than the preset value are used as the valid signals. The specific value of the preset value can be set according to actual needs, the embodiments of the invention are not limited to this. For example, the preset value is in a range of 0.5 to 0.8, in an embodiment, the preset value is in a range of 0.7 to 0.8.

It should be noted here that the waveform characteristic $CH_s$ of the standard signal can also be the waveform characteristic $CH_s$ of the standard signal in an ideal environment calculated according to the above method, and the waveform characteristic $CH_s$ of the standard signal can be stored in the laser range finder.

Subsequently, the valid signal with the largest ratio may be selected from all valid signals as the target signal, and the final distance of the object to be measured may be determined based on the target signal.

In summary, compared with the existing laser ranging signal processing method, the invention only needs to obtain a single returned signal, in the invention, N waveform signals including the returned waveform signal of the object to be measured are obtained, and the second signal process is performed on the N waveform signals, it is possible to obtain an accurate target signal. There is no need to emit and receive signals multiple times as in the related art, and to superimpose or integrate multiple returned signals. When the target signal is enhanced to a sufficiently large size, the target signal is obtained, thereby avoiding a large number of complex algorithms affecting the ranging efficiency, thereby improving the ranging speed while also improving the ranging accuracy, reducing power consumption, and improving the endurance of the laser range finder.

In addition, with the help of the above technical solution, the ranging method of the invention can achieve ranging from 0 to 5000 m.

It should be understood that the above method for improving the rang finding speed of the laser range finder is only exemplary, and those skilled in the art may make various modifications based on the above method, and the modified scheme also falls within the protection scope of the invention.

Second embodiment

Referring to FIG. 3, FIG. 3 illustrates a structural block diagram of a laser range finder 300 according to an embodiment of the invention. As shown in FIG. 3, the laser range finder 300 includes a laser emitter 310, an optical signal receiver 320 and a data processor 330. The laser emitter 310 and the optical signal receiver 320 are connected to the data processor 330.

The data processor 330 is configured to control the laser emitter 310 to emit a laser ranging pulse signal to an object to be measured, and control the optical signal receiver 320 to receive an optical reflection signal reflected by the object to be measured; perform, by using a mean filtering method, a first filtering process on the optical reflection signal to obtain a filtered signal, where the filtered signal includes multiple waveform signals; compare a signal-to-noise ratio value of each of the multiple waveform signals to a signal-to-noise ratio reference value corresponding to the signal-to-noise ratio, and screen waveform signals of the multiple waveform signals each with the signal-to-noise ratio value greater than the signal-to-noise ratio reference value corresponding to the signal-to-noise ratio as screened signals for ranging, where the signal-to-noise ratio reference value is determined based on a distance of the object to be measured corresponding to each of the multiple waveform signals; and determine, based on the screened signals, a final distance of the object to be measured.

In an embodiment, the data processor 330 is specifically configured to calculate a distance of the object to be measured corresponding to a current waveform signal, where the current waveform signal is any one of the multiple waveform signals; and substitute the distance of the object to be measured corresponding to the current waveform signal into a reference value linear proportional relationship equation to obtain a signal-to-noise ratio reference value corresponding to the current waveform signal.

In an embodiment, a calculation expression of the reference value linear proportional relationship equation is as follows:

$$y = -0.0039x + 4.9883;$$

where y represents the signal-to-noise ratio reference value corresponding to the current waveform signal; and x represents the distance of the object to be measured corresponding to the current waveform signal.

In an embodiment, the data processor 330 is specifically configured to select, in response to the screened signals being strong, a waveform signal with a maximum peak from the screened signals as a target signal, and determine, based on the target signal, the final distance of the object to be measured.

In an embodiment, the data processor 330 is specifically configured to intercept, in response to the screened signals being week, a continuous signal including the screened signals from the optical reflection signal, and calculate a mean of the continuous signal; calculate a mean square error of each waveform signal in the screened signals and the mean sequentially to obtain a waveform characteristic of each waveform signal; calculate a ratio of the waveform characteristic of each waveform signal to a waveform characteristic of a prestored standard signal sequentially, and take waveform signals corresponding to the ratio greater than a preset value as valid signals; and select an valid signal with a maximum ratio from the valid signals as a target signal, and determining, based on the target signal, the final distance of the object to be measured.

Since the device described in the above embodiment of the invention is a device used to implement the method of the above embodiment of the invention, based on the method described in the above embodiment of the invention, those skilled in the art can understand the specific structure and deformation of the device, thus it is not described here. All devices used in the method of the above embodiment of the invention belong to the scope of protection of the invention.

It should be understood by those skilled in the art that embodiments of the invention may be provided as methods, systems or computer program products. Therefore, the invention may take the form of a complete hardware embodiment, a complete software embodiment, or an embodiment combining software and hardware aspects. Moreover, the invention may take the form of a computer program product implemented on one or more computer-usable storage media (including but not limited to disk storage, CD-ROM and optical storage) containing computer-usable program code.

The invention is described with reference to flowcharts and/or block diagrams of methods, devices (systems) and computer program products according to embodiments of the invention. It should be understood that each process and/or block in the flowchart and/or block diagram, as well as the combination of processes and/or blocks in the flowchart and/or block diagram, can be implemented by computer program instructions.

It should be noted that in claims, any reference signs located between parentheses should not be understood as limiting the claims. A word "include" does not exclude the existence of components or steps that are not listed in the claims. A word "a" or "an" preceding a component does not exclude the presence of multiple such components. The invention may be implemented by means of hardware including a number of different components and by means of a suitably programmed computer. In the claims listing multiple devices, multiple of these devices may be specifically embodied by the same hardware. The use of the words first, second, and third is for convenience of expression only and does not indicate any order. These words may be understood as part of the name of the component.

In addition, it should be noted that, in the description of the specification, the description of terms "an embodiment", "some embodiments", "embodiment", "example", "specific example" or "some examples" means that the specific features, structures, materials or characteristics described in conjunction with the embodiment or example are included in at least one embodiment or example of the invention. In the specification, the schematic representations of the above terms do not necessarily refer to the same embodiment or example. Moreover, the specific features, structures, materials or characteristics described may be combined in any one or more embodiments or examples in a suitable manner. In addition, those skilled in the art may combine the different embodiments or examples described in the specification and the features of the different embodiments or examples, unless they are contradictory.

Although some of the embodiments of the invention have been described, those skilled in the art may make additional changes and modifications to these embodiments after knowing the basic creative concept. Therefore, the technical solution should be interpreted as including the embodiments and all changes and modifications falling within the scope of the invention.

Apparently, those skilled in the art can make various modifications and variations to the invention without departing from the spirit and scope of the invention. Thus, when these modifications and variations of the invention belong to the scope of the technical solution of the invention and its equivalent technology, the invention should also include these modifications and variations.

**Claims**

1. A method for improving ranging speed of a laser range finder, applied to a data processor of the laser range finder, wherein the laser range finder comprises a laser emitter, an optical signal receiver and the data processor; and the method comprises:

   controlling the laser emitter to emit a laser ranging pulse signal to an object to be measured, and controlling the optical signal receiver to receive an optical reflection signal reflected by the object to be measured;
performing, by using a mean filtering method, a filtering process on the optical reflection signal to obtain a filtered signal; wherein the filtered signal comprises a plurality of waveform signals;
comparing a signal-to-noise ratio value of each of the plurality of waveform signals to a signal-to-noise ratio reference value corresponding to the signal-to-noise ratio, and screening waveform signals of the plurality of waveform signals each with the signal-to-noise ratio value greater than the signal-to-noise ratio reference value corresponding to the signal-to-noise ratio as screened signals for ranging; wherein the signal-to-noise ratio reference value is determined based on a distance of the object to be measured corresponding to each of the plurality of waveform signals; and
determining, based on the screened signals, a final distance of the object to be measured.

2. The method as claimed in claim 1, wherein an obtaining process of the signal-to-noise ratio reference value comprises:

   calculating a distance of the object to be measured corresponding to a current waveform signal; wherein the current waveform signal is any one of the plurality of waveform signals; and
   substituting the distance of the object to be measured corresponding to the current waveform signal into a reference value linear proportional relationship equation to obtain a signal-to-noise ratio reference value corresponding to the current waveform signal.

3. The method as claimed in claim 2, wherein a calculation expression of the reference value linear proportional relationship equation is as follows:

$$y = -0.0039x + 4.9883;$$

   wherein y represents the signal-to-noise ratio reference value corresponding to the current waveform signal; and x represents the distance of the object to be measured corresponding to the current waveform signal.

4. The method as claimed in claim 1, wherein the determining, based on the screened signals, a final distance of the object to be measure comprises:
selecting, in response to the screened signals being strong, a waveform signal with a maximum peak from the screened signals as a target signal, and determining, based on the target signal, the final distance of the object to be measure.

5. The method as claimed in claim 1, wherein the determining, based on the screened signals, a final distance of the object to be measure comprises:

    intercepting, in response to the screened signals being week, a continuous signal comprising the screened signals from the optical reflection signal, and calculating a mean of the continuous signal;
    calculating a mean square error of each waveform signal in the screened signals and the mean sequentially to obtain a waveform characteristic of each waveform signal;
    calculating a ratio of the waveform characteristic of each waveform signal to a waveform characteristic of a prestored standard signal sequentially, and taking waveform signals corresponding to the ratio greater than a preset value as valid signals; and
    selecting a valid signal with a maximum ratio from the valid signals as a target signal, and determining, based on the target signal, the final distance of the object to be measure.

6. A laser range finder, comprising a laser emitter, an optical signal receiver and a data processor; wherein the data processor is configured to control the laser emitter to emit a laser ranging pulse signal to an object to be measured, and control the optical signal receiver to receive an optical reflection signal reflected by the object to be measured; perform, by using a mean filtering method, a filtering process on the optical reflection signal to obtain a filtered signal, wherein the filtered signal comprises a plurality of waveform signals; compare a signal-to-noise ratio value of each of the plurality of waveform signals to a signal-to-noise ratio reference value corresponding to the signal-to-noise ratio, and screen waveform signals of the plurality of waveform signals each with the signal-to-noise ratio value greater than the signal-to-noise ratio reference value corresponding to the signal-to-noise ratio as screened signals for ranging, wherein the signal-to-noise ratio reference value is determined based on a distance of the object to be measured corresponding to each of the plurality of waveform signals; and determine, based on the screened signals, a final distance of the object to be measure.

7. The laser range finer as claimed in claim 6, wherein the data processor is specifically configured to calculate a distance of the object to be measure corresponding to a current waveform signal, wherein the current waveform signal is any one of the plurality of waveform signals; and substitute the distance of the object to be measure corresponding to the current waveform signal into a reference value linear proportional relationship equation to obtain a signal-to-noise ratio reference value corresponding to the current waveform signal.

8. The laser range finer as claimed in claim 7, wherein a calculation expression of the reference value linear proportional relationship equation is as follows:

$$y = -0.0039x + 4.9883;$$

wherein y represents the signal-to-noise ratio reference value corresponding to the current waveform signal; and x represents the distance of the object to be measure corresponding to the current waveform signal.

9. The laser range finer as claimed in claim 6, wherein the data processor is specifically configured to select, in response to the screened signals being strong, a waveform signal with a maximum peak from the screened signals as a target signal, and determine, based on the target signal, the final distance of the object to be measure.

10. The laser range finer as claimed in claim 6, wherein the data processor is specifically configured to intercept, in response to the screened signals being week, a continuous signal comprising the screened signals from the optical reflection signal, and calculate a mean of the continuous signal; calculate a mean square error of each waveform signal in the screened signals and the mean sequentially to obtain a waveform characteristic of each waveform signal; calculate a ratio of the waveform characteristic of each waveform signal to a waveform characteristic of a prestored standard signal sequentially, and take waveform signals corresponding to the ratio greater than a preset value as valid signals; and select an valid signal with a maximum ratio from the valid signals as a target signal, and determining, based on the target signal, the final distance of the object to be measure.

11. The method as claimed in claim 6, wherein the mean filtering method comprises:

    collecting returned waveform signals, and calculating a mean of the returned waveform signals;
    calculating 1.1 to 1.3 times the mean as a filtering reference value; and
    filtering out waveform signals smaller than the filtering reference value.

12. The method as claimed in claim 10, wherein the preset value is in a range of 0.5 to 0.8.

13. The method as claimed in claim 12, wherein the preset value is in a range of 0.7 to 0.8.

14. A method for improving ranging speed of a laser range finder, comprising:

emitting, by a laser emitter, laser ranging pulse signal to an object to be measured; receiving, by an optical signal receiver, an optical reflection signal reflected by the object to be measured; performing, by a data processor and by using a mean filtering method, a filtering process on the optical reflection signal to obtain a filtered signal comprising a plurality of waveform signals; comparing, by the data processor, a signal-to-noise ratio value of each of the plurality of waveform signals to a signal-to-noise ratio reference value corresponding to the signal-to-noise ratio, and screening waveform signals of the plurality of waveform signals each with the signal-to-noise ratio value greater than the signal-to-noise ratio reference value corresponding to the signal-to-noise ratio as screened signals for ranging; wherein the signal-to-noise ratio reference value is determined based on a distance of the object to be measured corresponding to each of the plurality of waveform signals; and determining, based on the screened signals, a final distance of the object to be measured.

15. The method as claimed in claim 14, wherein an obtaining process of the signal-to-noise ratio reference value comprises:

calculating a distance of the object to be measured corresponding to a current waveform signal; wherein the current waveform signal is any one of the plurality of waveform signals; and substituting the distance of the object to be measured corresponding to the current waveform signal into a reference value linear proportional relationship equation to obtain a signal-to-noise ratio reference value corresponding to the current waveform signal, wherein the reference value linear proportional relationship equation is expressed as follows:

$$y = -0.0039x + 4.9883;$$

wherein y represents the signal-to-noise ratio reference value corresponding to the current waveform signal; and x represents the distance of the object to be measured corresponding to the current waveform signal.

Controlling the laser emitter to emit a laser ranging pulse signal to an object to be measured, and controlling the optical signal receiver to receive an optical reflection signal reflected by the object to be measured
S110

Performing, by using a mean filtering method, a filtering process on the optical reflection signal to obtain a filtered signal; where the filtered signal includes multiple waveform signals
S120

Comparing a signal-to-noise ratio value of each of the multiple waveform signals to a signal-to-noise ratio reference value corresponding to the signal-to-noise ratio, and screening waveform signals of the multiple waveform signals each with the signal-to-noise ratio value greater than the signal-to-noise ratio reference value corresponding to the signal-to-noise ratio as screened signals for ranging; where the signal-to-noise ratio reference value is determined based on a distance of the object to be measured corresponding to each of the multiple waveform signals
S130

Determining, based on the screened signals, a final distance of the object to be measured
S140

FIG. 1

Signal-to-noise ratio

Linear equation
simulation diagonal line

Invalid signal

Distance

Invalid signal

Valid signal

FIG. 2

Laser range finder 300

| Laser emitter 310 | Optical signal receiver 320 |

Data processor 330

FIG. 3

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 691 808 A (NOURRCIER JR CHARLES E [US] ET AL) 25 November 1997 (1997-11-25) * col. 2, lines 56-63, col. 3, lines 37- col. 4, line 62, col. 5, lines 13-40, col. 10, line 50- col. 11, line 2; figure 1 * ----- | 1-15 | INV. G01S7/4865 G01S7/487 G01S17/10 |
| Y | US 2007/273862 A1 (BARR KEITH E [US]) 29 November 2007 (2007-11-29) * paragraph [0015] * ----- | 1-15 | |

TECHNICAL FIELDS SEARCHED (IPC)

G01S

The present search report has been drawn up for all claims

| Place of search | Date of completion of the search | Examiner |
|---|---|---|
| Munich | 13 March 2026 | Metz, Carsten |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 20 5636

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2026

| Patent document cited in search report | | Publication date | Patent family member(s) | | Publication date |
|---|---|---|---|---|---|
| US 5691808 | A | 25-11-1997 | CA | 2180692 A1 | 01-02-1997 |
| | | | DE | 69621386 T2 | 23-01-2003 |
| | | | EP | 0757257 A2 | 05-02-1997 |
| | | | IL | 118876 A | 31-08-2000 |
| | | | JP | 2968214 B2 | 25-10-1999 |
| | | | JP | H09189768 A | 22-07-1997 |
| | | | KR | 970007393 A | 21-02-1997 |
| | | | NO | 316142 B1 | 15-12-2003 |
| | | | US | 5691808 A | 25-11-1997 |
| US 2007273862 | A1 | 29-11-2007 | US | 7184130 B1 | 27-02-2007 |
| | | | US | 2007273862 A1 | 29-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411813244